# EUROPEAN PATENT APPLICATION

(11) **EP 4 851 940 A1**
(43) Date of publication of application: **09.12.2026**
(21) Application number: 25747977.4
(22) Date of filing: 26.01.2025
(51) Int. Cl.: G06T 19/00, G06F 3/04815

(54) **EXTENDED REALITY-BASED INTERACTION METHOD AND APPARATUS, DEVICE, AND MEDIUM**

(30) Priority: 30.01.2024 CN 202410132309
(71) Applicant: Beijing Zitiao Network Technology Co., Ltd., Beijing 100190 (CN)
(72) Inventor: FU, Long, Beijing 100028 (CN)
(74) Representative: Marks & Clerk LLP
(86) International application number: PCT/CN2025/075342
(87) International publication number: WO 2025/162413

(57) **Abstract**

Embodiments of the disclosure relate to a method, an apparatus, a device, and a medium for interaction based on extended reality. The method includes: obtaining node data of a target human body joint first, where the node data of the target human body joint includes one or more human body joints in a preset human body bone model, and the node data is determined based on tracking data of a target tracking device; and then in accordance with a determination that a preset interaction condition is currently met according to the node data of the target human body joint, displaying a target virtual resource in an extended reality space. Since the node data of the human body joint can more accurately represent an interaction behavior of the user, embodiments of the disclosure determine whether the preset interaction condition in the extended reality space is currently met based on the node data of the target human body joint. This can improve the accuracy of recognizing the interaction behavior of the user, thereby enhancing the authenticity of interaction of the user in the extended reality space.

## Description

This application claims priority to Chinese Patent Application No. 202410132309.X, filed on January 30, 2024, and entitled "METHOD, APPARATUS, DEVICE, AND MEDIUM FOR INTERACTION BASED ON EXTENDED REALITY", which is hereby incorporated by reference in its entirety.

### FIELD

The present disclosure relates to the field of virtual display technologies, and in particular, to a method, an apparatus, a device, and a medium for interaction based on extended reality.

### BACKGROUND

Extended reality (XR) technology refers to creating, by a computer, an extended reality space in which humans and computers may interact by combining reality and virtual reality. XR is a general term for multiple technologies such as augmented reality (AR), virtual reality (VR), and mixed reality (MR). By integrating the visual interaction technologies of the three, users may be enabled to perform immersive interaction operations with the virtual world.

In the related art, a handle is usually used as a main extended reality device to complete interaction with the virtual world. Specifically, it is determined based on collected pose data of the handle whether the user has performed a certain interaction behavior, which may lead to insufficient accuracy in recognizing the interaction behavior.

Therefore, how to improve the accuracy of recognizing interaction behaviors to enhance the authenticity of user interaction in an extended reality space is an urgent technical issue that needs to be solved.

### SUMMARY

In order to solve the above technical problem or at least partially solve the above technical problem, the present disclosure provides a method, an apparatus, a device, and a medium for interaction based on extended reality, which can improve the accuracy of recognizing an interaction behavior of a user, thereby enhancing the authenticity of interaction of the user in an extended reality space.

In a first aspect, an embodiment of the present disclosure provides a method for interaction based on extended reality, the method including: obtaining node data of a target human body joint, where the target human body joint includes one or more human body joints in a preset human body bone model, and the node data is determined based on tracking data of a target tracking device; and in accordance with a determination that a preset interaction condition is currently met according to the node data of the target human body joint, displaying a target virtual resource in an extended reality space.

In an optional implementation, obtaining the node data of the target human body joint includes: obtaining node data of the human body joint corresponding to a target interaction object in the extended reality space.

In an optional implementation, the target human body joint includes a plurality of human body joints, the preset interaction condition includes a joint distribution condition, and determining that the preset interaction condition is currently met according to the node data of the target human body joint includes: determining that distribution data of the plurality of human body joints meets the joint distribution condition in the preset interaction condition.

In an optional implementation, the preset interaction condition includes an interaction time range condition, and determining that the preset interaction condition is currently met according to the node data of the target human body joint includes: determining that time stamp information of the node data of the target human body joint meets the interaction time range condition in the preset interaction condition.

In an optional implementation, obtaining the node data of the target human body joint includes: obtaining sensor data and/or image data of the target tracking device; determining the tracking data of the target tracking device based on the sensor data and/or the image data; and determining the node data of the target human body joint based on the tracking data of the target tracking device.

In an optional implementation, determining the node data of the target human body joint based on the tracking data of the target tracking device includes: determining, by using a target algorithm model, the node data of the target human body joint based on the tracking data of the target tracking device, where the target algorithm model is trained with data of the preset human body bone model.

In an optional implementation, the target tracking device at least includes a head-mounted device, the node data of the target human body joint is relative position node data determined based on a root node, and the root node is determined based on tracking data of the head-mounted device.

In an optional implementation, the node data includes position information, the preset interaction condition includes preset interaction position information, and determining that the preset interaction condition is currently met according to the node data of the target human body joint includes: determining that the position information of the target human body joint matches the preset interaction position information in the preset interaction condition.

In an optional implementation, the node data further includes speed information, the preset interaction condition further includes preset speed information corresponding to the preset interaction position information, and determining that the preset interaction condition is currently met according to the node data of the target human body joint includes: determining that the speed information of the target human body joint matches the preset speed information in the preset interaction condition.

In an optional implementation, the preset interaction condition further includes a preset interaction action condition, and before displaying the target virtual resource in the extended reality space, the method further includes recognizing a target interaction action; and determining that the target interaction action meets the preset interaction action condition.

In an optional implementation, recognizing the target interaction action includes: recognizing the target interaction action according to the tracking data of the target tracking device and a first action recognition model; or recognizing the target interaction action based on the node data and a second action recognition model.

In an optional implementation, the target tracking device at least includes a lower limb tracking device.

In an optional implementation, the target tracking device further includes a head-mounted device, or the target tracking device further includes a head-mounted device and a handle device.

In an optional implementation, the target tracking device further includes a head-mounted device, the node data is determined based on the tracking data of the target tracking device and hand tracking data, and the hand tracking data is obtained using the head-mounted device.

In a second aspect, the present disclosure provides an apparatus for interaction based on extended reality, the apparatus including: an obtaining module configured to obtain node data of a target human body joint, where the target human body joint includes one or more human body joints in a preset human body bone model, and the node data is determined based on tracking data of a target tracking device; and a first determination module configured to display a target virtual resource in an extended reality space in accordance with a determination that a preset interaction condition is currently met according to the node data of the target human body joint.

In a third aspect, an embodiment of the present disclosure further provides an electronic device, the electronic device including: a processor; and a memory, configured to store instructions that may be executed by the processor, where the processor is configured to read the instructions from the memory, and execute the instructions to implement the method for interaction based on extended reality provided by the embodiment of the present disclosure.

In a fourth aspect, an embodiment of the present disclosure further provides a computer-readable storage medium storing a computer program, where the computer program is configured to perform the method for interaction based on extended reality provided by the embodiment of the present disclosure.

In a fifth aspect, the present disclosure provides a computer program product, including a computer program/instructions, where when a processor executes the computer program/instructions, the above method is implemented.

Compared with the prior art, the technical solution provided by the embodiment of the present disclosure has the following advantages.

In the method for interaction based on extended reality provided by the embodiment of the present disclosure, firstly, node data of target human body joint is obtained, where the node data of the target human body joint includes one or more human body joints in the preset human body bone model, and the node data is determined based on tracking data of a target tracking device; then in accordance with a determination that a preset interaction condition is currently met according to the node data of the target human body joint, a target virtual resource is displayed in the extended reality space. Since the node data of the human body joint can more accurately represent an interaction behavior of the user, embodiments of the present disclosure determine whether the preset interaction condition in the extended reality space is currently met based on the node data of the target human body joint. This can improve the accuracy of recognizing the interaction behavior of the user, thereby enhancing the authenticity of interaction of the user in the extended reality space.

### BRIEF DESCRIPTION OF THE DRAWINGS

In combination with the drawings and with reference to the following specific embodiments, the above and other features, advantages, and aspects of the embodiments of the present disclosure will become more apparent. Throughout the drawings, the same or similar reference numerals represent the same or similar elements. It should be understood that the drawings are schematic, and that parts and elements are not necessarily drawn to scale.
FIG. 1 is a schematic diagram of an application scenario of a virtual reality device provided by an embodiment of the present disclosure;
FIG. 2 is a schematic flowchart of a method for interaction based on extended reality provided by an embodiment of the present disclosure;
FIG. 3 is a schematic diagram of a preset human body bone model provided by an embodiment of the present disclosure;
FIG. 4 is a schematic structural diagram of an apparatus for interaction based on extended reality provided by an embodiment of the present disclosure; and
FIG. 5 is a schematic structural diagram of an electronic device provided by an embodiment of the present disclosure.

### DETAILED DESCRIPTION

Embodiments of the present disclosure will be described in more detail below with reference to the drawings. Although some embodiments of the present disclosure are shown in the drawings, it should be understood that the present disclosure may be implemented in various forms, and should not be construed as being limited to the embodiments set forth herein. On the contrary, these embodiments are provided for a more thorough and complete understanding of the present disclosure. It should be understood that the drawings and embodiments of the present disclosure are only for illustrative purposes, and are not intended to limit the protection scope of the present disclosure.

It should be understood that steps described in method implementations of the present disclosure may be executed in different orders and/or in parallel. In addition, the method implementations may include additional steps and/or omit execution of the steps shown. The scope of the present disclosure is not limited in this regard.

As used herein, the term "include/comprise" and its variations are open-ended inclusions, that is, "include/comprise but not limited to". The term "based on" is "at least partially based on". The term "one embodiment" means "at least one embodiment"; the term "another embodiment" means "at least one other embodiment"; and the term "some embodiments" means "at least some embodiments". Related definitions of other terms will be given in the following description.

It should be noted that concepts such as "first" and "second" mentioned in the present disclosure are only used to distinguish different apparatuses, modules, or units, and are not used to limit an order or an interdependence of the functions performed by these apparatuses, modules, or units.

It should be noted that the modifiers of "one" and "a plurality of" mentioned in the present disclosure are illustrative rather than restrictive, and those skilled in the art should understand that unless otherwise clearly indicated in the context, they should be understood as "one or more".

The names of messages or information exchanged between a plurality of apparatuses in the implementations of the present disclosure are only for illustrative purposes, and are not intended to limit the scope of these messages or information.

Related explanations are provided for some technical concepts or noun concepts involved herein.

An extended reality device is a terminal that implements an extended reality effect, and may usually be provided in the form of glasses, a head mount display (HMD), or contact lenses for visual perception and other forms of perception. Certainly, the form of the extended reality device is not limited thereto, and may be further miniaturized or enlarged as needed.

Virtual reality (VR) technology, also known as a virtual environment, virtual reality, or an artificial environment, refers to a technology that uses a computer to generate a virtual world that may directly impose visual, auditory, and tactile sensations on a participant and allow the participant to interactively observe and operate.

Augmented reality (AR) technology refers to a technology that uses a computer to integrate virtual information with the reality world, and widely uses multimedia, three-dimensional modeling, real-time tracking and registration, intelligent interaction, sensing and other technical means to apply simulations of computer-generated texts, images, three-dimensional models, music, video and other virtual information to the reality world, thereby realizing the "enhancement" of the reality world.

The extended reality device according to the embodiments of the present disclosure may include, but is not limited to, the following types.

A computer-side virtual reality (PCVR) device, which uses a PC to perform related calculations and data output for a virtual reality function, and an external computer-side virtual reality device uses data output by the PC to achieve a virtual reality effect.

A mobile virtual reality device, which supports setting up a mobile terminal (such as a smart phone) in various ways (such as a head-mounted display provided with a dedicated card slot), and is connected to the mobile terminal in a wired or wireless manner. The mobile terminal performs related calculations of a virtual reality function, and outputs data to the mobile virtual reality device, for example, to watch a virtual reality video through an APP of the mobile terminal.

An all-in-one virtual reality device, which has a processor for performing related calculations of a virtual function, and thus has independent virtual reality input and output functions, and does not need to be connected to a PC or a mobile terminal, providing a high degree of freedom in use.

A virtual reality object, which is an object that interacts in a virtual scene (such as a target interaction object in an extended reality space), and is an object that is controlled by a user or a robot program (for example, an artificial intelligence-based robot program) and that may be stationary, move, and perform various behaviors in the virtual scene, such as a virtual human corresponding to the user in a live streaming scene, an obstacle wall in an extended reality game, etc.

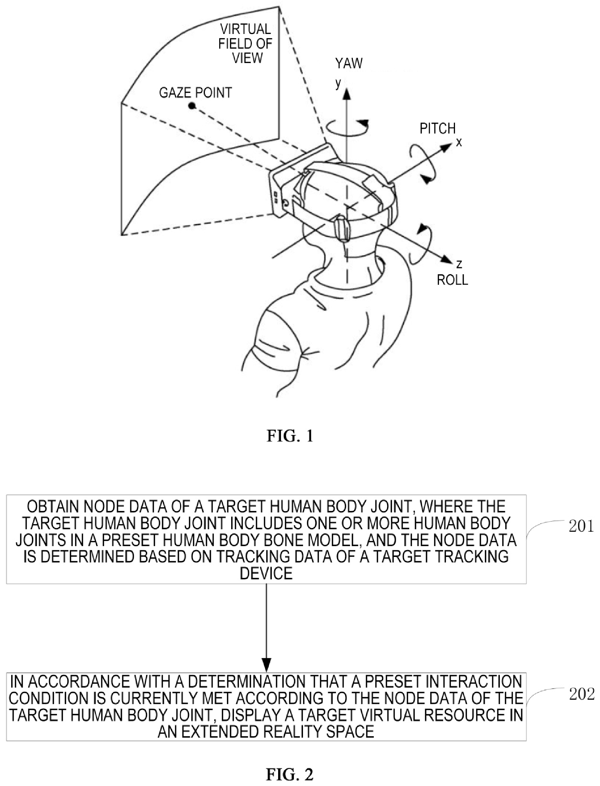

As shown in FIG. 1, the HMD is relatively light, ergonomically comfortable, and provides high-resolution content with low latency. The virtual reality device is provided with a posture detection sensor (such as a nine-axis sensor) for detecting a posture change of the virtual reality device in real time. If the user wears the virtual reality device, when the posture of the user's head changes, the real-time posture of the head will be transmitted to the processor to calculate a gaze point of the user's sight in the virtual environment. An image in the user's gaze range (i.e., a virtual field of view) in the three-dimensional model of the virtual environment is calculated according to the gaze point, and displayed on the display screen, providing an immersive experience as if the user were watching in a real environment.

In practical applications, when a user wears an HMD device and opens a predetermined application (such as an XR dance game), the HMD device will run a corresponding virtual scene (also referred to as an extended reality space). The virtual scene may be a simulation environment of the reality world, a semi-simulation and semi-fictional virtual scene, or a pure fictional virtual scene. The virtual scene may be any of a two-dimensional virtual scene, a 2.5-dimensional virtual scene, or a three-dimensional virtual scene, and the dimension of the virtual scene is not limited in the embodiments of the present application. For example, the virtual scene may include people, sky, land, ocean, etc., and the land may include environmental elements such as a desert and a city. The user may control a virtual object to move in the virtual scene, and may also use a handle device, a bare hand gesture, etc. to perform interactive control on controls, models, display content, characters, etc. in the virtual scene.

Based on the above, in the extended reality space, when determining whether the user has performed a certain interaction behavior only based on the collected pose data of the handle, there may be a problem of insufficient accuracy in recognizing the interaction behavior of the user, which affects the authenticity of the user's interaction in the extended reality space.

In order to enhance the authenticity of the user's interaction in the extended reality space, an embodiment of the present disclosure provides a method for interaction based on extended reality. Firstly, node data of a target human body joint is obtained, where the node data of the target human body joint includes one or more human body joints in a preset human body bone model, and the node data is determined based on tracking data of a target tracking device; and then in accordance with a determination that a preset interaction condition is currently met according to the node data of the target human body joint, a target virtual resource is displayed in an extended reality space.

Since the node data of the human body joint can more accurately represent an interaction behavior of the user, embodiments of the present disclosure determine whether the preset interaction condition in the extended reality space is currently met based on the node data of the target human body joint. This can improve the accuracy of recognizing the interaction behavior of the user, thereby enhancing the authenticity of interaction of the user in the extended reality space.

Based on this, an embodiment of the present disclosure provides a method for interaction based on extended reality, which is described below with reference to specific embodiments.

FIG. 2 is a schematic flowchart of a method for interaction based on extended reality provided by an embodiment of the present disclosure, and the method may be performed by an extended reality device. As shown in FIG. 2, the method includes block S201, which obtains node data of a target human body joint.

The target human body joint includes one or more human body joints in a preset human body bone model, and the node data is determined based on tracking data of a target tracking device.

The method for interaction based on extended reality provided by the embodiments of the present disclosure may be applied to an extended reality device. The extended reality device may be a head-mounted device, such as a head mount display (HMD) and other devices, or may be other types of extended reality devices, which is not limited in the embodiments of the present disclosure.

In the embodiments of the present disclosure, the node data of the target human body joint is determined based on the tracking data of the target tracking device. Specifically, the tracking data may include position data and/or posture data of the target tracking device, etc. In practical applications, the target tracking device may be tracked and positioned based on the position data and/or the posture data of the target tracking device, etc. The method for determining the node data of the target human body joint based on the tracking data of the target tracking device will be described in detail in subsequent embodiments, and will not be repeated here.

In an optional implementation, the target tracking device may at least include a lower limb tracking device, such as a leg tracking device, a foot tracking device, etc. In practical applications, the lower limb tracking device may be installed with a plurality of light-emitting elements, such as infrared LED lights, and the lower limb tracking device is optically positioned by acquiring an image of the light-emitting elements when emitting light, and then the tracking data of the lower limb tracking device is calculated.

In another optional implementation, the target tracking device may further include a lower limb tracking device and a head-mounted device. The head-mounted device may be, for example, glasses, a head mount display (HMD), contact lenses and other devices for visual perception and other forms of perception. The node data may be determined based on the tracking data of the target tracking device and hand tracking data, and the hand tracking data may be data obtained using the head-mounted device.

In another optional implementation, the target tracking device may further at least include a lower limb tracking device, a head-mounted device, and a handle device, and the node data of the target human body joint may be determined based on tracking data of the lower limb tracking device, the head-mounted device, and the handle device.

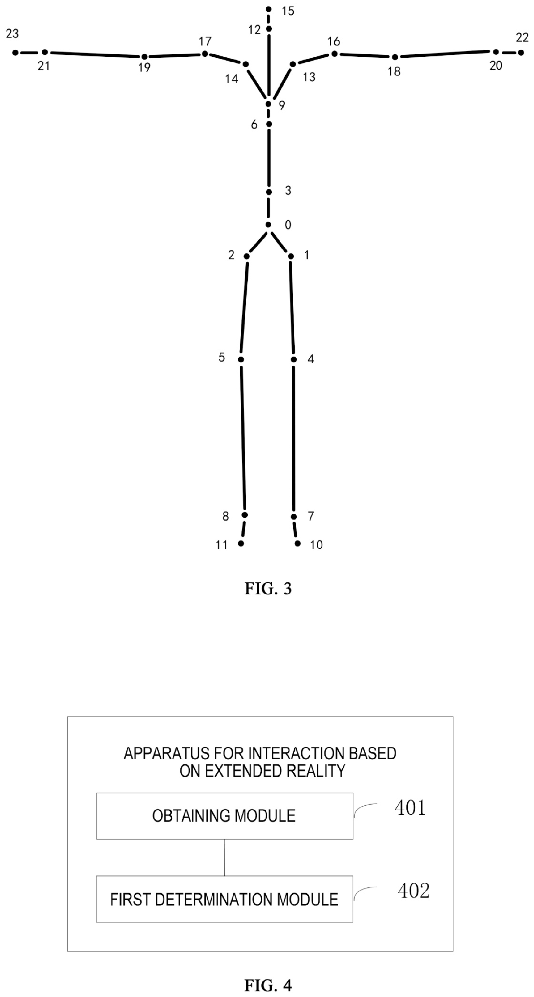

In the embodiment of the present disclosure, the preset human body bone model may define 24 human body joints and a positional relationship between respective human body joints. As shown in FIG. 3, which is a schematic diagram of a preset human body bone model provided by an embodiment of the present disclosure.

In practical applications, since there is a positional relationship between the 24 human body joints in the preset human body bone model, node data of the 24 human body joints may be calculated according to the tracking data of the target tracking device, such as node data of an ankle joint 11, node data of a hand joint 23, and the like.

Specifically, the target tracking device may be bound to a preset part of the human body, such as the head, legs, hands, etc. After obtaining the tracking data of the target tracking device, the tracking data of the target tracking device may be input into the preset human body bone model, and the preset human body bone model may calculate and process the tracking data of the target tracking device based on the positional relationship between the human body joints, and output node data of 24 human body joints.

It should be noted that the preset human body bone model in the embodiments of the present disclosure includes not only a human body bone model which defines 24 human body joints, but also a human body bone model which define other numbers of human body joints, such as a preset human body bone model which defines 20 human body joints. The number of human body joints and the positional relationship between the respective human body joints in the preset human body bone model are not specifically limited in the embodiments of the present disclosure.

In the embodiments of the present disclosure, the target human body joint may include one or more human body joints in the preset human body bone model. For example, the target human body joint may be 24 human body joints in the preset human body bone model, or lower limb joints, etc.

In an optional implementation, the target human body joint may include the human body joint corresponding to a target interaction object in the extended reality space, and the node data of the target human body joint may include node data of the human body joint corresponding to the target interaction object in the extended reality space. The target interaction object may be any one or more interaction objects in the extended reality space (i.e., the virtual interaction object in the virtual scene). For example, the target interaction object in the XR music game may include virtual interaction objects such as a "virtual note" and a "virtual block".

At block S202, in accordance with a determination that a preset interaction condition is currently met according to the node data of the target human body joint, a target virtual resource is displayed in the extended reality space.

In practical applications, after determining the node data of the target human body joint based on the tracking data of the target tracking device, it is determined whether the preset interaction condition is currently met based on the node data of the target human body joint. When the preset interaction condition is met, the target virtual resource is displayed in the extended reality space to indicate that the user has successfully interacted in the extended reality space.

For example, the target virtual resource may be used to present an effect of a successful interaction with the target interaction object. For example, the target virtual resource may be a sound effect of a knee hitting a note, an animation effect of a foot stepping on a note, and the like.

In practical applications, different target interaction objects may correspond to different preset interaction conditions. For example, assuming that the target interaction object is a virtual note in the extended reality space, and the corresponding preset interaction condition is that a position of the user's foot joint is within a preset position range. It may be understood that in this case, the human body joint corresponding to the target interaction object is the foot joint, and accordingly, the obtained node data of the target human body joint is node data corresponding to the foot joint, such as position information of the foot joint.

In the embodiments of the present disclosure, the preset interaction condition may be used to match the node data of the target human body joint, so as to determine whether the user interaction behavior reflected by the node data may meet the preset interaction condition. The preset interaction condition may include interaction conditions in various dimensions. For example, the preset interaction may include a combination of one or more of a joint distribution condition, an interaction time range condition, interaction position information, speed information, and an interaction action condition.

In the method for interaction based on extended reality provided by the embodiments of the present disclosure, node data of the target human body joint is obtained firstly, where the node data of the target human body joint includes one or more human body joints in a preset human body bone model, and the node data is determined based on tracking data of a target tracking device; and then in accordance with a determination that a preset interaction condition is currently met according to the node data of the target human body joint, a target virtual resource is displayed in an extended reality space. Since the node data of the human body joint can more accurately represent an interaction behavior of the user, embodiments of the present disclosure determine whether the preset interaction condition in the extended reality space is currently met based on the node data of the target human body joint. This can improve the accuracy of recognizing the interaction behavior of the user, thereby enhancing the authenticity of interaction of the user in the extended reality space.

In practical applications, the node data of the target human body joint may be determined based on the tracking data of the target tracking device, where the tracking data of the target tracking data may be obtained based on sensor data and image data of the target tracking device.

In the embodiments of the present disclosure, sensor data and/or image data of the target tracking device is obtained firstly, the tracking data of the target tracking device is determined based on the sensor data and/or the image data, and then the node data of the target human body joint is determined based on the tracking data of the target tracking device.

In practical applications, the target tracking device may include a lower limb tracking device and a head-mounted device, where the lower limb tracking device may be provided with an IMU sensor. The IMU sensor, also known as an inertial sensor, is a combination of an accelerometer sensor and a gyroscope sensor, which is used to detect an acceleration and an angular velocity of the target tracking device to represent its motion, such as a six-axis IMU sensor, a nine-axis IMU sensor, etc.

In the embodiments of the present disclosure, the lower limb tracking device may collect sensor data of the lower limb tracking device based on the built-in IMU sensor, and report the sensor data to the head-mounted device, such that the head-mounted device determines tracking data of the lower limb tracking device based on the received sensor data. The lower limb tracking device may also calculate tracking data locally based on the sensor data, and then report the tracking data to the head-mounted device.

In practical applications, the lower limb tracking device may also be provided with a photographing component. The lower limb tracking device may collect image data of the surrounding environment through the photographing component, and upload the image data to the head-mounted device, such that the head-mounted device determines the tracking data of the lower limb tracking device based on the received image data. The lower limb tracking device may also calculate the tracking data locally based on the image data of the surrounding environment, and then upload the tracking data to the head-mounted device.

In an optional implementation, the image data of the lower limb tracking device may further include image data collected by other associated devices (such as a head-mounted device, or other external cameras).

In the embodiments of the present disclosure, after obtaining the sensor data and/or the image data of the target tracking device, the tracking data of the target tracking device may be determined based on the sensor data and/or the image data. The tracking data of the target tracking device may include position data and posture data of the target tracking device.

In practical applications, the extended reality device may acquire image data of the light-emitting elements of the target tracking device when emitting light, perform optical positioning of the target tracking device through an optical method, and then calculate the position data and the posture data of the target tracking device. The position data and the posture data of the target tracking device may also be calculated based on other methods in the embodiments of the present disclosure, which will not be repeated here.

In an optional implementation, in order to further improve the accuracy of recognizing the user interaction behavior reflected by the node data, after determining the tracking data of the target tracking device, the node data of the target human body joint may be determined by using a target algorithm model based on the tracking data of the target tracking device.

In the embodiments of the present disclosure, the target algorithm model may be trained with data matching the preset human body bone model. The preset human body bone model may include 24 human body joints, and the target algorithm model may process the tracking data of the target tracking device based on the preset human body bone model, to obtain the node data of the target human body joint.

In the embodiments of the present disclosure, the input of the target algorithm model may include the tracking data of the target tracking device, such as tracking data of a lower limb tracking device, pose data of a head-mounted device and the tracking data of the lower limb tracking device, pose data of the head-mounted device, pose data of a hand tracking device and the tracking data of the lower limb tracking device, and the like.

In an optional implementation, the input data of the target algorithm model may further include the tracking data of the target tracking device and other tracking data. For example, the other tracking data may include hand tracking data, etc., where the hand tracking data may be obtained using the head-mounted device.

For example, the tracking data of the target tracking device may be input into the target algorithm model first, and then node data of human body joints matching the preset human body bone model may be output. Then, the node data of the target human body joint may be obtained from the node data of the human body joint of the preset human body bone model.

In the embodiments of the present disclosure, the output node data of the human body joint of the preset human body bone model may include position data and speed data of the respective human body joints. The position data refers to x, y, z coordinate data of the human body joint, and the speed data may be calculated based on position information of the human body joint in one frame or a plurality of consecutive frames of sensor data and/or image data.

In another optional implementation, the target tracking device may further at least include a head-mounted device. Accordingly, the node data of the target human body joint may also be relative position node data determined based on a root node, where the root node may be determined based on tracking data of the head-mounted device.

For example, a head joint may be taken as the root node (or a parent node), and other human body joints may be taken as subordinate nodes (or child nodes) of the root node, the node data of the human body joint in the preset human body bone model may include pose data (i.e., position data and the posture data) of the root node (or the parent node) and pose data of the respective subordinate nodes relative to the root node (or the parent node).

Specifically, the tracking data of the head-mounted device may be determined first as node data of a head joint in the preset human body bone model, and the head joint is taken as the root node; the node data of the human body joint in the preset human body bone model may be then determined based on the positional relationship between the human body joints in the preset human body bone model and the node data of the root node; finally, the node data of the target human body joint may be obtained from the node data of the human body joint in the preset human body bone model.

In order to enrich interaction manners of the user in the extended reality space, after obtaining the plurality of human body joints, it may also be determined whether distribution data of the plurality of human body joints meets a joint distribution condition in the preset interaction condition, and if it is determined that the distribution data of the plurality of human body joints meets the joint distribution condition in the preset interaction condition, the target virtual resource is displayed in the extended reality space.

In the embodiments of the present disclosure, the distribution data refers to a relative position distribution relationship between the plurality of human body joints, and the joint distribution condition is used to represent preset interaction position information of the plurality of human body joints. Accordingly, determining whether the distribution data of the plurality of human body joints meets the joint distribution condition may include determining whether the plurality of human body joints respectively match their preset interaction position information.

In an optional implementation, the distribution data may also be used to represent a position distribution of the plurality of human body joints in the extended reality space, and the joint distribution condition may be used to represent a positional distribution relationship between the plurality of human body joints in the extended reality space, for example, the foot joints and the hand joints are respectively distributed at a preset upper position and a preset lower position in the extended reality space.

For ease of understanding of the solution of the embodiments of the present application, taking a sports fitness game or a leg dance as an example, node data of the foot joint and node data of the knee joint may be obtained first, and then it is determined whether a position distribution of the foot joint and the knee joint meets the joint distribution condition. For example, it is determined whether the position distribution of the foot joint and the knee joint is at a preset position. If it is determined that the position distribution of the foot joint and the knee joint is within the preset position, it indicates that the distribution data of the foot joint and the knee joint meets the joint distribution condition. In this case, the target virtual resource may be displayed in the extended reality space, such as displaying an animation effect of the knee hitting, so as to enhance the immersion of the user in the extended space.

In order to further enrich the interaction manners of the user in the extended reality space, the target virtual resource may also be displayed in the extended reality space when it is determined that time stamp information of the node data of the target human body joint meets an interaction time range condition in the preset interaction condition.

In the embodiments of the present disclosure, since the node data of the target human body joint is determined based on the tracking data of the target tracking device, and the tracking data is determined based on the sensor data and/or the image data that carry the time stamp information, the node data of the target human body joint may include the time stamp information. The time stamp information of the node data may be used to represent time information of the target human body joint. The interaction time range condition may define the time range during which the target interaction object is interactable in the extended reality space. For example, within a preset time range after a note or a block lights up (i.e., the time range during which the note or the block is interactable), it is determined whether the interaction time range condition is currently met according to the time stamp information of the target human body joint.

For ease of understanding of the solution of the embodiments of the present application, taking a dance machine game as an example, within a preset time range after a block lights up, it is determined whether the node data of the foot joint matches other preset interaction conditions. For example, it is determined whether the position information of the foot joint matches the preset interaction position information. If it is determined that within the preset time range, the node data of the foot joint matches the preset interaction position information in the preset interaction condition, it indicates that the user steps on the lit block. In this case, the target virtual resource may be displayed in the extended reality space, such as an animation effect of the foot stepping on the lit block.

In an optional implementation, if within the preset time range, the node data of the foot joint does not match any preset interaction condition, that is, it is determined that the time stamp information of the foot joint does not meet the interaction time range condition, it indicates that the user does not step on the lit block. In this case, a preset virtual resource may be displayed in the extended reality space, such as an animation effect of "missing the lit block", where the preset virtual resource may be used to indicate a failure of the user to interact in the extended reality space.

In order to further enrich the interaction manners of the user in the extended reality space, it may also be determined whether to display the target resource object in the extended reality space based on position information of the target human body joint and preset interaction position information in the preset interaction condition.

In the embodiments of the present disclosure, the position information of the target joints may include coordinate information of the target human body joint in the extended reality space, and the preset interaction position information may define position information of the target interaction object in the extended reality space, such as a track position where the target interaction object is located, etc.

For ease of understanding of the solution of the embodiments of the present application, taking a music game including leg actions as an example, it is determined whether the position information of the foot joint (i.e., the target human body joint) matches the position information corresponding to the block (i.e., the target interaction object). If it is determined that the position information of the foot joint matches the position information of the block, it indicates that the position information of the target human body joint matches the preset interaction position information in the preset interaction condition. In this case, the target virtual resource is displayed in the extended reality space, such as a music effect of the foot stepping on the lit block, so as to prompt the user that the lit block is stepped on.

In practical applications, for the sports fitness game, the user needs to actively interact with the target interaction object using a body part, for example, the user needs to use the knee joint to hit the note to complete the game. During the game, there may be cases where the user lifts the knee and waits for the virtual note to hit the it. It is obviously inaccurate to recognize whether the user interaction behavior meets the preset interaction condition only using the position information of the knee joint. Therefore, on the basis of recognizing the user interaction behavior based on the position information, in order to further improve the accuracy of recognizing the user interaction behavior reflected by the node data, the user interaction behavior may also be recognized in combination with the speed information included in the node data.

Specifically, it is determined whether the speed information of the target human body joint matches preset speed information in the preset interaction condition, and if it is determined that the speed information of the target human body joint matches the preset speed information in the preset interaction condition, the target virtual resource is displayed in the extended reality space.

For ease of understanding of the solution of the embodiments of the present application, taking a sports fitness game as an example, while determining that the position information of the knee joint (i.e., the target human body joint) matches the preset interaction position information, it may also be determined whether the speed information of the knee joint matches the preset speed information. If the speed information of the knee joint matches the preset speed information, it indicates that the user lifts the knee to hit the target interaction object. In this case, the target virtual resource is displayed in the extended reality space.

In order to further enrich the interaction manners of the user in the extended reality space, in an optional implementation, it may also be determined whether to display the target resource object in the extended reality space based on a target interaction action and a preset interaction action condition in the preset interaction condition.

The target interaction action may be used to describe a relative positional relationship between the plurality of human body joints, such as a knee strike, a forward kick, a squat, or a dance action, etc. The preset interaction condition may define a relative positional relationship between the plurality of human body joints, for example, the foot joints are within a preset range below the knee joints, or an angle of the foot joints relative to the knee joints is within a preset range.

In the embodiments of the present disclosure, the target interaction action is firstly recognized, and then it is determined whether the target interaction action meets the preset interaction action condition, and if the target interaction action meets the preset interaction action condition, the target virtual resource is displayed in the extended reality space.

In practical applications, the target interaction action may be recognized according to the tracking data of the target tracking device and a first action recognition model, so as to improve the accuracy of recognizing the user interaction behavior reflected by the node data. The first action recognition model may be trained based on tracking data collected by the target tracking device when the target interaction action occurs, and the first action recognition model may be used to recognize the target interaction action based on the tracking data of the target tracking device.

In practical applications, a training process of the first action recognition model may include: inputting training samples into an action recognition model, where the training samples may include sensor data corresponding to a target interaction action (such as a stomping action) collected within a preset time period, and obtaining the first action recognition model for recognizing the stomping action by training the action recognition model based on the sensor data corresponding to the target interaction action.

In an application process of the first action recognition model, the collected tracking data of the target tracking device is first input into the first action recognition model corresponding to the target interaction action, and a recognition result is obtained after recognition processing by the first action recognition model; and then it is determined whether the recognition result includes the target interaction action. If it is determined that the recognition result includes the target interaction action, it indicates that the target interaction action is recognized by the first action recognition model.

In another optional implementation, the target interaction action may also be recognized based on the node data and a second action recognition model. The second action recognition model may be used to recognize the target interaction action based on the node data of the target human body joint.

Specifically, the obtained node data of the target human body nodes is first input into the second action recognition model corresponding to the target interaction action, and a recognition result is obtained after recognition processing by the second action recognition model; and then it is determined whether the recognition result includes the target interaction action. If it is determined that the recognition result includes the target interaction action, it indicates that the target interaction action is recognized by the second action recognition model.

In an optional implementation, after the target interaction action is recognized, it is further determined whether the target interaction action meets the preset interaction action condition, so as to display the target virtual resource corresponding to the preset interaction condition in the extended reality space when the preset interaction action condition is met, thereby further enriching the interaction functions of the user in the extended reality space.

In an optional implementation, it may also be determined whether the preset interaction condition is currently met by combining three dimensions of the position information, the speed information and the target interaction action in the node data, so as to further improve the accuracy of recognizing the user interaction behavior reflected by the node data.

For example, in the sports fitness game, the target interaction object may be a preset area in the extended reality space, and the user uses the knee to complete game interaction with the target interaction object. In the process of the user playing the game, it may be determined whether the user hits the target interaction object through a positional relationship between a position of the user's knee joint and a position of the preset area.

While determining that the position of the knee joint meets the preset interaction position information, it is also possible to determine positions of a plurality of joints (for example, whether the foot joint is at a preset position below the knee joint), and recognize whether an action reflected by the foot joint and the knee joint meets the preset interaction action condition. Alternatively, while determining that the position of the knee joint meets the preset interaction position information, it is also possible to determine whether the speed information of the knee joint matches the preset speed information, to determine whether the user hits the target interaction object.

In order to achieve the above embodiments, the present disclosure further provides an apparatus for interaction based on extended reality. FIG. 4 is a schematic structural diagram of an apparatus for interaction based on extended reality provided by an embodiment of the present disclosure, and the apparatus may be achieved by software and/or hardware, and generally may be integrated in an electronic device. As shown in FIG. 4, the apparatus includes: an obtaining module 401 configured to obtain node data of a target human body joint, where the target human body joint includes one or more human body joints in a preset human body bone model, and the node data is determined based on tracking data of a target tracking device; and a first determination module 402 configured to display a target virtual resource in an extended reality space accordance with a determination that a preset interaction condition is currently met according to the node data of the target human body joint.

In an optional implementation, the obtaining module includes: a first obtaining sub-module configured to obtain node data of the human body joints corresponding to a target interaction object in the extended reality space.

In an optional implementation, the target human body joint includes a plurality of human body joints, the preset interaction condition includes a joint distribution condition, and the first determination module includes: a first determination sub-module configured to determine that distribution data of the plurality of human body joints meets the joint distribution condition in the preset interaction condition.

In an optional implementation, the preset interaction condition includes an interaction time range condition, and the first determination module further includes: a second determination sub-module configured to determine that time stamp information of the node data of the target human body joint meets the interaction time range condition in the preset interaction condition.

In an optional implementation, the obtaining module includes: a second obtaining sub-module configured to obtain sensor data and/or image data of the target tracking device; a third determination sub-module configured to determine the tracking data of the target tracking device based on the sensor data and/or the image data; and a fourth determination sub-module configured to determine the node data of the target human body joint based on the tracking data of the target tracking device.

In an optional implementation, the fourth determination sub-module is further configured to: determine, by using a target algorithm model, the node data of the target human body joint based on the tracking data of the target tracking device, where the target algorithm model is trained with data of the preset human body bone model.

In an optional implementation, the target tracking device at least includes a head-mounted device, the node data of the target human body joint is relative position node data determined based on a root node, and the root node is determined based on tracking data of the head-mounted device.

In an optional implementation, the node data includes position information, the preset interaction condition includes preset interaction position information, and the first determination module includes: a fifth determination sub-module configured to determine that the position information of the target human body joint matches the preset interaction position information in the preset interaction condition.

In an optional implementation, the node data further includes speed information, the preset interaction condition further includes preset speed information corresponding to the preset interaction position information, and the first determination module further includes: a fifth determination sub-module configured to determine that the speed information of the target human body joint matches the preset speed information in the preset interaction condition.

In an optional implementation, the preset interaction condition further includes a preset interaction action condition, and the apparatus further includes: a recognition module configured to recognize a target interaction action; and a second determination module configured to determine that the target interaction action meets the preset interaction action condition.

In an optional implementation, the recognition module includes: a first recognition sub-module configured to recognize the target interaction action according to the tracking data of the target tracking device and a first action recognition model; or a first recognition sub-module configured to recognize the target interaction action based on the node data and a second action recognition model.

In an optional implementation, the target tracking device at least includes a lower limb tracking device.

In an optional implementation, the target tracking device further includes a head-mounted device, or the target tracking device further includes a head-mounted device and a handle device.

In an optional implementation, the target tracking device further includes a head-mounted device, the node data is determined based on the tracking data of the target tracking device and hand tracking data, and the hand tracking data is obtained using the head-mounted device.

In the apparatus for interaction based on extended reality provided by the embodiments of the present disclosure, node data of target human body joint is obtained firstly, the node data of the target human body joint includes one or more human body joints in a preset human body bone model, and the node data is determined based on tracking data of a target tracking device; and then in accordance with a determination that a preset interaction condition is currently met according to the node data of the target human body joint, a target virtual resource is displayed in an extended reality space. Since the node data of the human body joint can more accurately represent an interaction behavior of the user, embodiments of the present disclosure determine whether the preset interaction condition in the extended reality space is currently met based on the node data of the target human body joint. This can improve the accuracy of recognizing the interaction behavior of the user, thereby enhancing the authenticity of interaction of the user in the extended reality space.

The apparatus for interaction based on extended reality provided by the embodiments of the present disclosure may perform the method for interaction based on extended reality provided by any embodiment of the present disclosure, and has corresponding functional modules and beneficial effects for performing the method.

In order to achieve the above embodiments, the present disclosure further provides a computer program product, including a computer program/instructions, where when the computer program/instructions is executed by a processor, the method for interaction based on extended reality in the above embodiments is achieved.

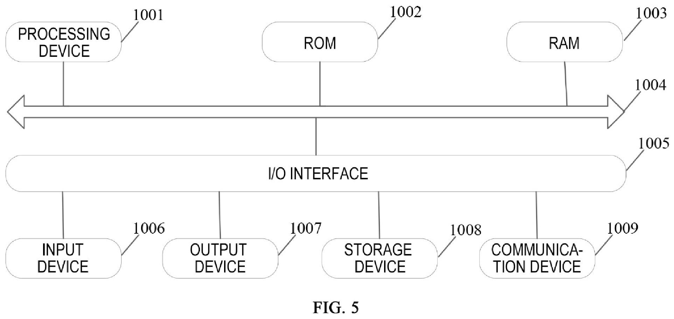

FIG. 5 is a schematic structural diagram of an electronic device provided by an embodiment of the present disclosure.

Referring specifically to FIG. 5 below, which shows a schematic structural diagram of an electronic device 1000 suitable for implementing the embodiments of the present disclosure. The electronic device 1000 in the embodiments of the present disclosure may include but are not limited to mobile terminals such as a mobile phone, a notebook computer, a digital broadcast receiver, a personal digital assistant (PDA), a tablet computer, a portable multimedia player (PMP), a vehicle-mounted terminal (e.g., a vehicle-mounted navigation terminal), etc., and fixed terminals such as a digital TV, a desktop computer, etc. The electronic device shown in FIG. 5 is only an example, and should not impose any limitation on the function and scope of use of the embodiments of the present disclosure.

As shown in FIG. 5, the electronic device 1000 may include a processing device (such as a central processing unit, a graphics processing unit, etc.) 1001, which may perform various appropriate actions and processing according to a program stored in a read-only memory (ROM) 1002 or a program loaded from a storage device 1008 to a random access memory (RAM) 1003. In the RAM 1003, various programs and data required for the operation of the electronic device 1000 are also stored. The processing device 1001, the ROM 1002 and the RAM 1003 are connected to each other through a bus 1004. An input/output (I/O) interface 1005 is also connected to the bus 1004.

Usually, the following devices may be connected to the I/O interface 1005: an input device 1006 including, for example, a touch screen, a touchpad, a keyboard, a mouse, a camera, a microphone, an accelerometer, a gyroscope, etc.; an output device 1007 including, for example, a liquid crystal display (LCD), a speaker, a vibrator, etc.; a storage device 1008 including, for example, a magnetic tape, a hard disk, etc.; and a communication device 1009. The communication device 1009 may allow the electronic device 1000 to perform wireless or wired communication with other devices to exchange data. Although FIG. 5 shows the electronic device 1000 having various devices, it should be understood that it is not required to implement or have all the shown devices. More or fewer devices may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program contains program code for performing the method shown in the flowchart. In such an embodiment, the computer program may be downloaded and installed from a network through the communication device 1009, or installed from the storage device 1008, or installed from the ROM 1002. When the computer program is executed by the processing device 1001, the above-mentioned functions defined in the method for interaction based on extended reality of the embodiments of the present disclosure are executed.

It should be noted that the above computer-readable medium in the present disclosure may be a computer-readable signal medium, a computer-readable storage medium, or any combination thereof. The computer-readable storage medium may be, for example, but not limited to, an electrical, magnetic, optical, electromagnetic, infrared, or semiconductor system, apparatus, device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated on a baseband or as a part of a carrier, and computer-readable program code is carried therein. This propagated data signal may take a variety of forms, including but not limited to an electromagnetic signal, an optical signal, or any suitable combination of the above. The computer-readable signal medium may also be any computer-readable medium other than the computer-readable storage medium, and the computer-readable signal medium may send, propagate, or transmit the program for use by or in combination with the instruction execution system, apparatus, or device. The program code contained on the computer-readable medium may be transmitted by any suitable medium, including but not limited to: a wire, an optical cable, a radio frequency (RF), etc., or any suitable combination of the above.

In some implementations, the client and the server may communicate using any currently known or future developed network protocol, such as the hypertext transfer protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be contained in the above electronic device, or may exist alone without being assembled into the electronic device.

The above computer-readable medium carries one or more programs that, when executed by the electronic device, cause the electronic device to: obtain node data of a target human body joint first, where the node data of the target human body joint includes one or more human body joints in a preset human body bone model, and the node data is determined based on tracking data of a target tracking device; and then in accordance with a determination that a preset interaction condition is currently met according to the node data of the target human body joint, display a target virtual resource in an extended reality space. Since the node data of the human body joint can more accurately represent an interaction behavior of the user, embodiments of the present disclosure determine whether the preset interaction condition in the extended reality space is currently met based on the node data of the target human body joint. This can improve the accuracy of recognizing the interaction behavior of the user, thereby enhancing the authenticity of interaction of the user in the extended reality space. The computer program code for performing the operations of the present disclosure may be written in one or more programming languages or a combination thereof, where the programming languages include but are not limited to object-oriented programming languages, such as Java, Smalltalk, C++, and include conventional procedural programming languages, such as "C" language or similar programming languages. The program code may be executed entirely on a user's computer, partly on the user's computer, as a stand-alone software package, partly on the user's computer and partly on a remote computer, or entirely on the remote computer or server. In the case of involving a remote computer, the remote computer may be connected to the user's computer through any kind of network, including a local area network (LAN) or a wide area network (WAN), or it may be connected to an external computer (e.g., connected by using Internet provided by an Internet service provider).

The flowcharts and block diagrams in the drawings illustrate the possibly implemented architectures, functions, and operations of the system, method, and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagrams and/or flowcharts, and a combination of the blocks in the block diagrams and/or flowcharts may be implemented by a dedicated hardware-based system that executes specified functions or operations, or may be implemented by a combination of dedicated hardware and computer instructions.

The involved units described in the embodiments of the present disclosure may be implemented by software or hardware. Among them, the name of the unit does not constitute a limitation on the unit itself under certain circumstances.

The functions described above herein may be performed at least partially by one or more hardware logic components. For example, without limitation, example types of hardware logic components that may be used include: field programmable gate array (FPGA), application specific integrated circuit (ASIC), application specific standard product (ASSP), system on chip (SOC), complex programmable logical device (CPLD) and more.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but are not limited to, an electronic, magnetic, optical, electromagnetic, infrared, or semiconductor system, apparatus, or device, or any suitable combination of the above. More specific examples of the machine-readable storage medium would include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

The above description is only a preferred embodiment of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosure concept. For example, a technical solution formed by replacing the above features with technical features having similar functions as the above features and being disclosed in the present disclosure (but not limited thereto).

In addition, although the various operations are depicted in a particular order, this should not be understood as requiring that the operations be performed in the particular order shown or in a sequential order. Under certain circumstances, multitasking and parallel processing may be beneficial. Similarly, although the above discussion contains a number of specific implementation details, these should not be interpreted as limiting the scope of the present disclosure. Certain features described in the context of separate embodiments may also be implemented in a single embodiment in combination. On the other hand, various features described in the context of a single embodiment may also be implemented in a plurality of embodiments individually or in any suitable sub-combination.

Although the subject matter has been described in language specific to structural features and/or logical actions of the method, it should be understood that the subject matter defined in the appended claims is not necessarily limited to the specific features or actions described above. On the contrary, the specific features and actions described above are only example forms for implementing the claims.

## Claims

1. A method for interaction based on extended reality, comprising:
obtaining node data of a target human body joint, wherein the target human body joint comprises one or more human body joints in a preset human body bone model, and the node data is determined based on tracking data of a target tracking device; and
in accordance with a determination that a preset interaction condition is currently met according to the node data of the target human body joint, playing a target virtual resource in an extended reality space.

2. The method of claim 1, wherein obtaining the node data of the target human body joint comprises:
obtaining node data of the human body joint corresponding to a target interaction object in the extended reality space.

3. The method of claim 1, wherein the target human body joint comprises a plurality of human body joints, the preset interaction condition comprises a joint distribution condition, and determining that the preset interaction condition is currently met according to the node data of the target human body joint comprises:
determining that distribution data of the plurality of human body joints meets the joint distribution condition in the preset interaction condition.

4. The method of claim 1, wherein the preset interaction condition comprises an interaction time range condition, and determining that the preset interaction condition is currently met according to the node data of the target human body joint comprises:
determining that time stamp information of the node data of the target human body joint meets the interaction time range condition in the preset interaction condition.

5. The method of claim 1, wherein obtaining the node data of the target human body joint comprises:
obtaining sensor data and/or image data of the target tracking device;
determining the tracking data of the target tracking device based on the sensor data and/or the image data; and
determining the node data of the target human body joint based on the tracking data of the target tracking device.

6. The method of claim 5, wherein determining the node data of the target human body joint based on the tracking data of the target tracking device comprises:
determining, by using a target algorithm model, the node data of the target human body joint based on the tracking data of the target tracking device, wherein the target algorithm model is trained with data matching the preset human body bone model.

7. The method of claim 5, wherein the target tracking device at least comprises a head-mounted device, the node data of the target human body joint is relative position node data determined based on a root node, and the root node is determined based on tracking data of the head-mounted device.

8. The method of claim 1, wherein the node data comprises position information, the preset interaction condition comprises preset interaction position information, and determining that the preset interaction condition is currently met according to the node data of the target human body joint comprises:
determining that the position information of the target human body joint matches the preset interaction position information in the preset interaction condition.

9. The method of claim 8, wherein the node data further comprises speed information, the preset interaction condition further comprises preset speed information corresponding to the preset interaction position information, and determining that the preset interaction condition is currently met according to the node data of the target human body joint comprises:
determining that the speed information of the target human body joint matches the preset speed information in the preset interaction condition.

10. The method of any of claims 1 to 9, wherein the preset interaction condition further comprises a preset interaction action condition, and before displaying the target virtual resource in the extended reality space, the method further comprises:
recognizing a target interaction action; and
determining that the target interaction action meets the preset interaction action condition.

11. The method of claim 10, wherein recognizing the target interaction action comprises:
recognizing the target interaction action according to the tracking data of the target tracking device and a first action recognition model; or
recognizing the target interaction action based on the node data and a second action recognition model.

12. The method of claim 1, wherein the target tracking device at least comprises a lower limb tracking device.

13. The method of claim 12, wherein the target tracking device further comprises a head-mounted device, or the target tracking device further comprises a head-mounted device and a handle device.

14. The method of claim 12, wherein the target tracking device further comprises a head-mounted device, the node data is determined based on the tracking data of the target tracking device and hand tracking data, and the hand tracking data is obtained using the head-mounted device.

15. An apparatus for interaction based on extended reality, comprising:
an obtaining module configured to obtain node data of target human body joint, wherein the target human body joint comprises one or more human body joints in a preset human body bone model, and the node data is determined based on tracking data of a target tracking device; and
a first determination module configured to display a target virtual resource in an extended reality space in accordance with a determination that a preset interaction condition is currently met according to the node data of the target human body joint.

16. An electronic device, comprising:
a processor; and
a memory, configured to store instructions executable by the processor;
wherein the processor is configured to read the instructions from the memory, and execute the instructions to implement a method for interaction based on extended reality according to any of claims 1 to 14.

17. A computer-readable storage medium storing a computer program, the computer program being configured to perform a method for interaction based on extended reality of according to claims 1 to 14.
